(19) **Europäisches Patentamt**
**European Patent Office**
**Office européen des brevets**

(11) Veröffentlichungsnummer: **0 259 786**
**A1**

(12) **EUROPÄISCHE PATENTANMELDUNG**

(21) Anmeldenummer: **87112874.0**

(22) Anmeldetag: **03.09.87**

(51) Int. Cl.⁴: **G06F 13/38**

(30) Priorität: **12.09.86 CH 3679/86**

(43) Veröffentlichungstag der Anmeldung:
**16.03.88 Patentblatt 88/11**

(84) Benannte Vertragsstaaten:
**AT BE CH DE ES FR GB GR IT LI LU NL SE**

(71) Anmelder: **XMIT AG**
**Neumattstrasse 7**
**CH-8953 Dietikon(CH)**

(72) Erfinder: **Leibu, Jacques**
**Grünmattweg 6**
**CH-8967 Widen(CH)**

(74) Vertreter: **EGLI-EUROPEAN PATENT**
**ATTORNEYS**
**Horneggstrasse 4**
**CH-8008 Zürich(CH)**

(54) **Auf einer Steckkarte für einen Mikrocomputer angeordnete Schnittstelle mit bestimmbaren Protokollen.**

(57) Die Schnittstelle dient der Emulation einer vorgegebenen Schnittstelle. Die Schnittstellen-Schaltung umfasst einen Bus (4,5) auf je einer Seite der Schnittstelle und mindestens eine CPU (15) zur Steuerung eines Protokollumsetzers. Der erste Bus (4) ist durch den Steckerteil (2) der Steckkarte an einen Bus des Mikrocomputers und der zweite Bus (5) durch einen Verbindungsteil der Steckkarte (3) an einen Bus einer Anwenderschaltung angeschlossen.

Der Protokollumsetzer besteht aus zwei mikroprozessorgesteuerten, untereinander asynchronen Teilumsetzern (6,7), von denen der erste (6) mit dem ersten Bus (4) und der zweite (7) mit dem zweiten Bus (5) verbunden ist und die untereinander über einen dritten, mittigen Bus (14) verbunden sind. Das dem mittigen Bus zugeordnete Protokoll ist von den dem ersten und dem zweiten Bus zugeordneten Protokollen verschieden.

Es können zwei CPUs (8,9) vorgesehen sein, von denen je eine einen Teilumsetzer (6,7) steuert, oder eine einzige CPU (15) höherer Ordnung, in welcher die beiden CPUs (8,9) vereint oder enthalten sind und welche die beiden Teilumsetzer (6,7) steuert.

Das einem bestimmten Bus (4 bzw. 5) zugeordnete Protokoll ist bestimmbar oder, wenn es beim Anschalten der Schnittstelle vorbestimmt ist, veränderbar, indem man über den anderen (5 bzw. 4) und den mittigen Bus (14) in den der entsprechenden CPU (9 bzw. 8) zugehörigen RAM (13 bzw. 12) ein Programm einliest.

EP 0 259 786 A1

## Auf einer Steckkarte für einen Mikrocomputer angeordnete Schnittstelle mit bestimmbaren Protokollen

Die Erfindung betrifft eine auf einer Steckkarte für einen Mikrocomputer angeordnete Schnittstelle gemäss dem Oberbegriff des Anspruchs 1.

Die Erfindung steht also im Zusammenhang mit dem Datenübertragungsweg (Bus) von Mikrorechnern, die allgemein auch als Personal Computer (PC) bekannt sind, und sie ist von besonderem Interesse für Anwender der Datenkommunikation. Das Bussystem eines PCs besteht normalerweise aus einer Zentraleinheit (CPU) und einem bidirektionalem Bus. Die CPU enthält normalerweise einen Mikroprozessor, Festwertspeicher (ROM), les-und schreibbare Speicher (RAM oder andere nichtflüchtige Speicher), sowie je nach Ausbau und vorgesehener Anwendung diverse periphere integrierte Schaltungen (IC). Die ROM sind nur lesbar, sie enthalten unter anderem die Initialisierungsprogramme, welche beim Anschalten oder nach einem Warmstart ("reset") automatisch ablaufen. Die RAM sind nicht nur lesbar, sondern auch - schreibbar, sie sind als Programm-und Datenspeicher verwendbar und können durch eine batteriegestützte Speisung nicht-flüchtig gemacht werden, wobei gelegentlich auch andere nichtflüchtige Speicher wie elektrisch löschbare programmierbare Festwertspeicher (EEPROM), Magnetblasenspeicher usw. verwendet werden. Diese RAM enthalten unter anderem eingelesene Programme, welche ein bestimmtes Datenkommunikationsproblem lösen, sowie gegebenenfalls auch Daten. Eine oder mehrere dieser peripheren ICs steuern den bidirektionalen PC-Bus, welcher normalerweise aus drei Teilbussen besteht: Adressbus, Datenbus und Steuerbus. CPU und Bus sind auf einer oder mehreren Leiterplatten derart angeordnet, dass mehrere zusätzliche Leiterplatten an den Bus angeschlossen werden können, um die Fähigkeiten des PCs zu erweitern. Von besonderem Interesse sind hier Leiterplatten in der Form von Steckkarten, welche der Datenkommunikation dienen und eine oder mehrere Schnittstellen für die Datenkommunikation enthalten. Diese Schnittstellen können parallel oder seriell, genormt oder anwendungsspezifisch sein.

Um dem PC immer neue Anwendungen in der Datenkommunikation zu erschliessen, wurden in den letzten Jahren viele mit dem PC-Bus kompatible Steckkarten und die dazugehörige Software entwickelt. Der Trend geht eindeutig dahin, die einzelnen Steckkarten nicht nur kostengünstiger, sondern auch vielseitiger zu machen. Letzteres ist - schon deswegen nötig, weil die Anzahl der in ein PC einsetzbaren Steckkarten beschränkt ist und die PCs ihrerseits mit einer wachsenden Anzahl verschiedener Kommunikationsbedürfnissen konfrontiert sind (andere Computer, periphere Geräte, lokale, nationale und internationale Kommunikationsnetze aller Art in wachsender Anzahl).

Die bekannten Datenkommunikations-Steckkarten, die eine Schnittstelle zwischen dem PC-Bus und einem am PC angeschlossenen externen Bus erstellen, können im wesentlichen zwei Typen zugeordnet werden:

Datenkommunikations-Steckkarten vom ersten Typ benötigen keinen eigenen Mikroprozessor, um bestimmte, oft standardisierte Funktionen auszuüben. Sie können mit Software verschiedener Hersteller betrieben werden, welche nicht auf der Steckkarte, sondern auf dem PC "läuft". Steckkarten dieser Art werden von verschiedenen Herstellern auf mehr oder weniger ähnliche Art und Weise realisiert. Beispiele dafür sind koaxiale, serielle oder parallele Schnittstellen zum Anschluss von Modems, Druckern, Terminals usw.

Datenkommunikations-Steckkarten vom zweiten Typ benötigen einen eigenen Mikroprozessor. Sie können ausschliesslich mit der einer speziellen, auf die betreffende Steckkarte zugeschnittenen Software betrieben werden, welche auf der Steckkarte "läuft". Beispiele dafür sind SNA/SDLC-Emulationskar ten, X.25-Kommunikationskarten, BSC-Schnittstellen, Steckkarten zum Anschluss an lokale Netze usw., deren Software auf der Steckkarte selbst "läuft".

Die Erfindung steht im Zusammenhang mit Steckkarten vom ersten Typ, also mit Datenkommunikations-Steckkarten, bei welchen die für ihren Betrieb benötigte Software auf dem PC "läuft".

Solche Steckkarten des ersten Typs haben den Nachteil, dass man für jede spezifische Anwendung eine entsprechende Steckkarte benötigt, was bei Händlern und bei Anwendern mit wechselnden Bedürfnissen zur Lagerung einer grösseren Anzahl von verschiedenen Steckkarten führt. Abgesehen von der damit verbundenen grossen Investition werden dabei Probleme der sorgfältigen Manipulation und der Identifikation von einander oft ziemlich ähnlichen Steckkarten bei der Ablage in und bei der Entnahme aus dem Lager gestellt.

Ein weiterer Nachteil solcher Steckkarten ist, dass man auf einem PC zur Bereitstellung einer Vielzahl von Funktionen eine entsprechende Vielzahl von solchen Steckkarten benötigt, während die auf dem PC belegbaren Steckplätze nur in beschränkter Anzahl vorhanden sind.

Aus EP-0068992 ist eine Verbindungsschaltung zum Austausch von Daten zwischen verschiedenen Mess-Systemen bekannt, bei der ein vorbestimmter Meister-Computer einen vorbestimmten Sklaven-Computer steuert, welcher seinerseits einen ganzen Messaufbau steuert. Diese Verbindungsschaltung ermöglicht das Schreiben vom Meister-Computer aus in einen Speicher des Sklaven-Computers, das Lesen aus einem Speicher des Sklaven-Computers durch den Meister-Computer, die Uebertragung eines Programmes für den Sklaven-Computer vom Meister-Computer zum Sklaven-Computer, das Starten und Stoppen eines Programmes im Sklaven-Computer durch den Meister-Computer und die Steuerung des - schrittweisen Betriebs des Sklaven-Computers durch den Meister-Computer. Die Verbindungsschaltung ist jedoch von einem Mikroprozessor gesteuert, dessen Programm fest in einem ROM untergebracht ist und weder durch den Meister-Computer noch durch den Sklaven-Computer verändert werden kann. Das Steuerungsprotokoll ist also vorbestimmt.

Aus dem Aufsatz von Vaidya "Applications of Mini and Microcomputers" in IEEE, 1980 IECI Proceedings, 17.-20. März 1980, ist ein Protokollumsetzer ("Protocol Translator") für die Norm IEEE-488 (IEEE-488 = "Standard Digital Interface for Programmable Instrumentation") bekannt, bei dem ein zur Verfahrensteuerung geeigneter Computer ("Process Control Computer") an einen IEEE-488-Bus angeschlossen wird. Dabei kann die Rolle des "Process Control Computer" passiv ("Listener"), aktiv ("Talker") oder steuernd ("Controller") sein. Für verschiedene Arten von "Process Control Computer" muss aber zwingend eine jeweils passende und vorbestimmte mikroprozessorgesteuerte Schaltung, nämlich die sehr spezielle, genau definierte IEEE-488-Hardware verwendet werden. Die Schnittstelle und das Protokoll sind also vorbestimmt.

Aus dem Aufsatz von Pascoe "Interconnecting Devices of different Communication Protocols" in IBM Technical Disclosure Bulletin Vol. 26 No.7A, (12/1983) ist bekannt, Meldungen gemäss einem ersten Protokoll zu empfangen und gemäss einem zweiten Protokoll weiterzusenden. Die Schaltung funktioniert in beide Richtungen. Es werden ganze Meldungen nach einem bestimmten Protokoll empfangen und abgespeichert, dann wird die Meldung bearbeitet und aus dem Speicher nach einem anderen Protokoll weitergeleitet. Es wird also in Blöcken, sequentiell gearbeitet. Die Konversion erfolgt mikroprozessorgesteuert und jeweils für eine ganze Meldung. Es sind aber zwei fest vorbestimmte, nicht austauschbare Protokolle, die dabei zur Anwendung kommen.

Aus dem Aufsatz von Firth und Mitchell "IBM System/370 Channel/Unibus Interface" in IBM Technical Disclosure Bulletin Vol. 24 No.12, 05/1982) ist bekannt, die beiden inkompatiblen Schnittstellen ("Interfaces") IBM System/370 Channel und Unibus miteinander zu verbinden. Es ist aber eine spezielle mikroprozessorgesteuerte Schaltung, welche die Konversion der Daten und der Steuersignale bewerkstelligt. Obschon die Bussysteme zweier Computer miteinander verbunden werden, findet trotzdem keine Emulation statt, sondern es handelt sich um eine fest zugeordnete Schaltung, welche nur der Austausch von Daten und von Steuersignalen erlaubt. Die Schnittstelle und das Protokoll sind also vorbestimmt.

Diese bekannten Schaltungen erfüllen jeweils genau eine Aufgabe bzw. sie führen genau eine vorbestimmte Konversion aus. Ihre Aufgabe und Funktion ist fest vorgegeben und nicht verschiedenen Anwendungen anpassbar. Es ist nicht möglich, damit eine Vielzahl von verschiedenen Schnittstellenschaltungen zu emulieren. Emulation ist in diesem Zusammenhang die Tätigkeit eines Systems, das eine Schnittstellenschaltung unter Ausnützung aller ihrer Möglichkeiten echt betreibt, obwohl sie gar nicht physikalisch vorhanden ist, sondern lediglich nachgebildet wird. Emulation einer Schnittstellenschaltung, die nicht physikalisch vorhanden ist, steht also hier im Gegensatz zur blossen Kommunikation mit einer echt vorhandenen Schnittstellenschaltung.

Es ist daher Aufgabe der Erfindung, eine Steckkarte der eingangs erwähnten Art zu schaffen, auf welcher eine beliebige Anzahl von verschiedenen Datenkommunikations-Steckkarten emuliert werden kann, so dass die Funktion der Steckkarte geändert werden kann, ohne dass Schaltungsänderungen vorgenommen oder Steckkarten ausgetauscht werden müssen.

Zur Lösung dieser Aufgabe wird die Erfindung gekennzeichnet durch die im Anspruch 1 angegebene Kombination von Merkmalen. Vorteilhafte Ausbildungen der Erfindung ergeben sich aus den abhängigen Ansprüchen.

Damit wird erreicht, dass mit nur einer Steckkarte, also unter Belegung nur eines Steckplatzes im PC, die Protokolle des ersten und des zweiten Busses unabhängig voneinander durch Software festgelegt werden können, so dass eine Schnittstelle zwischen zwei beliebig gewählten Bussen und Protokollen geschaffen und auch geändert werden kann, ohne dass dabei eine Änderung der Hardware, d.h. ein Auswechseln der Steckkarte nötig ist. Somit kann man mit einer einzigen Steckkarte eine Vielzahl von Software verschiedener Hersteller betreiben.

Beispielsweise kann man nach dem Einschalten eines PCs vorerst den Ausgangs-Bus des PCs (den zweiten Bus) durch Einlesen der entsprechenden Software mit einem Protokoll versehen, das diesen Bus als serielle X.25-Schnittstelle konfiguriert, worauf man eine andere Software einlesen kann, die den internen PC-Bus (den ersten Bus) mit einem Protokoll versieht, das diesen Bus in gleicher Art wie eine SDLC-Steckkarte betreibt. Im Endeffekt erhält man den emulierten Betrieb eines bestimmten Terminals im Verbund mit einem bestimmten Datennetzwerk, beispielsweise ein emuliertes Terminal vom Typ "IBM 3278" im Verbund mit einem X.25-Paketvermittlungsnetz ("IBM" ist ein Warenzeichen der International Business Machines Corporation). Durch Einlesen der geeigneten Software kann man bei spielsweise am Ausgang von der seriellen X.25-Schnittstelle zum "token ring"-Netzwerk oder zum Anschluss an einen grösseren Rechner (Minicomputer) wechseln, und man kann am Eingang vom "IBM 3278"-Terminal zum "IBM PC"-Terminal zurück oder noch zum "IBM 5250"-Terminal hinüber wechseln. Alle diese Wechsel erfolgen durch Einlesen von Software ohne jeglichen Wechsel von Hardware.

In allen Kombinationen von Protokollen des ersten und des zweiten Busses ist die Emulation vollständig, d.h. eine für die betreffende Schnittstelle bestimmte Software "läuft" auf der Steckkarte mit dem konfigurierten Betrieb der CPU oder CPUs genau so, als ob es sich um die geeignete fest programmierte ("dedicated") Schnittstelle handeln würde, d.h. der Anwender merkt nach der Inbetriebnahme keinen Unterschied.

Die erfindungsgemässe Schaltung unterscheidet sich dabei in folgenden wesentlichen Punkten vom vorstehend erwähnten Stand der Technik von Verbindungsschaltungen und Protokollwandlern: Es gibt kein Verhältnis von Meister-Computer zu Sklaven-Computer, beide Seiten sind völlig gleichberechtigt. Bei den beiden Schnittstellen sind nur die physikalischen Anschlüsse vorbestimmt. Die Bedeutung und die zeitliche Bestimmung ("Timing") der Signale können der jeweiligen Anwendung angepasst werden, d.h. die Protokolle sind frei wählbar, soweit dies die physikalische Schnittstelle zulässt. Die Programme für den oder die Mikroprozessoren, welche die Protokoll-Konversion durchführen, sind nicht fest vorbestimmt, sondern sie können anwendungsspezifisch von einer der beiden Seiten her geladen werden. Es findet eine echte Emulation statt, d.h. es können nicht nur zwei Systeme miteinander kommunizieren, sondern das eine System betreibt ein anderes, dessen Vorhandensein durch die Erfindung simuliert wird. Als Resultat ist es die aus der vollständigen Emulation resultierende Vielseitigkeit, welche die Erfindung wesentlich vom vorstehend erwähnten Stand der Technik von Verbindungsschaltungen und Protokollwandlern unterscheidet, die immer nur genau eine Anwendung abdecken, also zweckbezogen ("dedicated") sind.

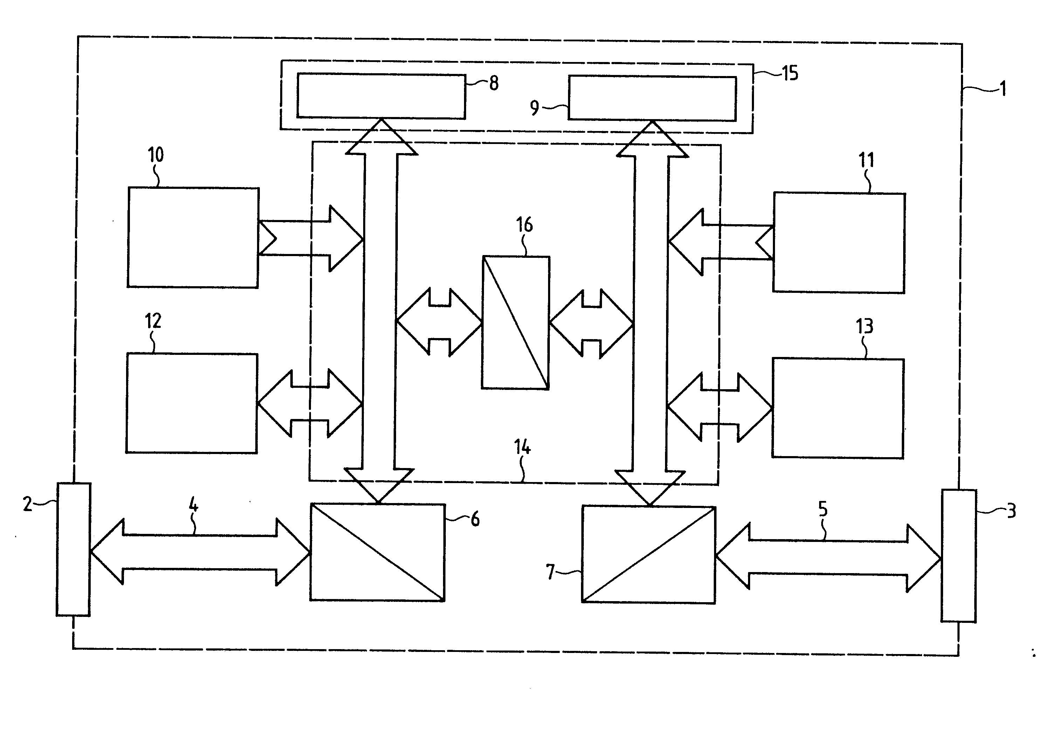

Die Erfindung und bevorzugte Ausbildungen davon werden im nachstehenden unter Bezugnahme auf die Zeichnung näher beschrieben.

Die Figur zeigt ein Blockschaltbild einer Ausbildung der Erfindung.

In der Figur ist eine Schnittstellen-Schaltung mit dem gestrichelten Rahmen 1 symbolisiert. Diese Schnittstellen-Schaltung ist auf einer nicht näher dargestellten Steckkarte angeordnet, die dazu bestimmt und ausgebildet ist, in einen Stecker eines Mikrocomputers eingesetzt zu werden. Die Gruppe der im entsprechenden Steckerteil der Steckkarte angeordneten elektrischen Kontakte ist mit dem Rahmen 2 symbolisiert. Desgleichen ist mit dem Rahmen 3 eine Gruppe von elektrischen Kontakten symbolisiert, die in einem Steckerteil der Steckkarte angeordnet sind, welcher zur Aufnahme eines pasenden Gegenstückes eines Steckers bestimmt und ausgebildet ist. An die Kontaktgruppe 2 ist ein erster Bus 4 und an die Kontaktgruppe 3 ist ein zweiter Bus 5 angeschlossen.

Zwischen den Kontaktgruppen 2 und 3 bildet die Schnittstellen-Schaltung 1 also eine Schnittstelle, welche als Protokollumsetzer wirkt, d.h. sie emuliert einen Protokollumsetzer, indem sie den bidirektionalen Übergang von Adress-, Daten-und Steuersignalen zwischen dem Bus 4 und dem Bus 5 gemäss einem Protokoll definiert und steuert. Anders ausgedrückt, dem Bus 4 und dem Bus 5 ist je ein Protokoll zugeordnet, das unter anderen den Takt und die zulässigen Werte und Bedeutung der Signale auf den verschiedenen Leitungen definiert, und die Schnittstelle definiert und steuert gesamthaft die Umsetzung der Signale von einem dem Bus 4 bzw. 5 zugeordneten Protokoll in einen dem Bus 5 bzw. 4 zugeordneten Protokoll. Die Umsetzung, d.h. die Übertragung der Signale vom einen auf den anderen der Busse 4 und 5, ist asynchron, d.h. der Takt der Signal auf dem einem Bus ist in keine Weise vom Takt der Signale auf dem anderen Bus abhängig.

Physisch ist diese Schnittstelle auf der Steckkarte angeordnet. Diese ist mit ihrem die Kontaktgruppe 2 enthaltenden Steckerteil im Stecker eines Mikrocomputers eingesetzt, dadurch ist der Bus 4 an einen Bus des Mikrocomputers angeschlossen. An dem die Kontaktgruppe 3 enthaltenden Steckerteil ist ein passendes Gegenstück eines Steckers einer Anwenderschaltung angeschlossen, dadurch ist der Bus 5 an einen Bus einer Anwenderschaltung angeschlossen.

Der emulierte Protokollumsetzer besteht aus zwei Teilumsetzern 6 und 7, wobei der Teilumsetzer 6 mit dem ersten Bus 4 und der Teilumsetzer 7 mit dem zweiten Bus 5 verbunden ist. Die Teilumsetzer 6 und 7 sind beide mikroprozessorgesteuert, jedoch untereinander asynchron. Zu diesem Zweck ist der Teilumsetzer 6 mit einer zugehörigen Mikroprozessor-Zentraleinheit (CPU) 8 verbunden und davon aus gesteuert, wobei diese CPU 8 zu ihrem Betrieb auch noch mit einem ROM 10 und einem RAM 12 verbunden ist. Desgleichen ist der Teilumsetzer 7 mit einer zugehörigen Mikroprozessor-Zentraleinheit (CPU) 9 verbunden und davon aus gesteuert, wobei diese CPU 9 zu ihrem Betrieb auch noch mit einem ROM 11 und einem RAM 13 verbunden ist.

Die CPUs 8 und 9 sowie die zugehörigen ROM 10 und 11, RAM 12 und 13 und die damit gesteuerten Teilumsetzer 6 und 7 verkehren untereinander über einen dritten, mittigen Bus 14, mit dem sie verbunden sind, und welcher zu diesem Zweck ebenfalls einen Umsetzer 16 enthält, um die beiden asynchron laufenden CPUs zusammenzuschalten. Das dem mittigen Bus 14 zugeordnete Protokoll ist von den jeweiligen Protokollen verschieden, die dem ersten 4 und dem zweiten Bus 5 zugeordnet sind. Die Sig nale auf den drei Bussen 4, 5 und 14 sind also asynchron zueinander.

In den ROM 10 und 11 kann je ein Programm gespeichert sein, das beim Anschalten der Schnittstelle je ein vorbestimmtes Protokoll auf je einem der Busse 4 und 5 definiert. Damit wird gewährleistet, dass gleich beim Anschalten ("booting") der Schnittstelle ein Signalverkehr zwischen den Bussen 4 bzw. 5 und dem Bus 14 sowie den daran angeschlossenen CPUs 8 und 9 und den zugehörigen ROM 10 und 11 sowie RAM 12 und 13 möglich ist.

Dank diesem Signalverkehr ist es möglich, über den ersten Bus 4 und den mittigen Bus 14 ein Programm in den der zweiten CPU 9 zugehörigen RAM 13 einzulesen und mit diesem Programm das dem zweiten Bus 5 zugeordnete Protokoll zu ändern. Desgleichen ist es dank diesem Signalverkehr möglich, über den zweiten Bus 5 und den mittigen Bus 14 ein Programm in den der ersten CPU 8 zugehörigen RAM 12 einzulesen und mit diesem Programm das dem ersten Bus 4 zugeordnete Protokoll zu ändern.

Es ist natürlich möglich, eines der erwähnten Programme, die je ein vorbestimmtes Protokoll auf je einem der Busse 4 und 5 definieren, nicht im betreffende ROM zu speichern und die Schnittstelle somit beim Anschalten noch undefiniert zu lassen. Nach dem Anschalten wird das betreffende Protokoll bestimmt. Wenn das zu definierende Protokoll das dem zweiten Bus 5 zugeordnete Protokoll ist, kann man es durch ein Programm bestimmen, das über den ersten Bus 4 und den mittigen Bus 14 in den der zweiten CPU 9 zugehörigen RAM 13 eingelesen wird. Wenn das zu definierende Protokoll das dem ersten Bus 4 zugeordnete Protokoll ist, kann man es durch ein Programm bestimmen, das über den zweiten Bus 5 und den mittigen Bus 14 in den der ersten CPU 8 zugehörigen RAM 12 eingelesen wird.

In einer Variante der Ausbildung der Erfindung können die beiden CPUs 8 und 9 in einer einzigen CPU 15 vereint sein oder Teile einer einzigen CPU 15 höherer Ordnung sein, was mit den gestrichelten Verbindungslinien symbolisiert wird. Die beiden Teilumsetzer werden dann von dieser einzigen CPU 15 gesteuert. Die Entscheidung, zwei CPUs 8 und 9 oder eine einzige CPU 15 zu verwenden, ist abhängig von den Fähigkeiten der zum betreffenden Zeitpunkt verfügbaren CPUs in Kombination mit (under anderem) wirtschaftlichen Überlegungen. Bei dieser Variante der Ausbildung ist der Bus 14 mit der einzigen CPU 15 verbunden, daher darf eine der in der Figur dargestellten Verbindungen zu den CPUs 8 und 9 ausfallen, sofern es nicht technisch vorteilhafter ist, je eine Verbindung zu je einem der erwähnten Teile der CPU 15 zu erstellen. Auch können die ROMs 10 und 11 und/oder die RAMs 12 und 13 wahlweise getrennt bleiben oder miteinander vereint werden. Jedenfalls bleiben die Teilumsetzer 6 und 7 logisch getrennt, was nicht hindert, sie physisch in einer gemeinsamen Schaltung auszubilden.

## Ansprüche

1. Auf einer Steckkarte für einen Mikrocomputer angeordnete Schnittstelle mit einer Schnittstellen-Schaltung zur Emulation einer auf einer Steckkarte für einen Mikrocomputer angeordneten vorgegebenen Schnittstellen-Schaltung mit je einem Bus auf je einer Seite der Schnittstelle und mindestens einer Mikroprozessor-Zentraleinheit (CPU) zur Steuerung eines Protokollumsetzers zur asynchronen Übertragung von Signalen vom einen auf den anderen Bus unter Umsetzung der Signale von einem dem ersten Bus zugeordneten Protokoll in einen dem zweiten Bus zugeordneten Protokoll, wobei der erste Bus durch den Steckerteil der Steckkarte an einen Bus des Mikrocomputers und der zweite Bus durch einen vorbestimmten Verbindungsteil der Steckkarte an einen Bus einer Anwenderschaltung angeschlossen ist, dadurch gekennzeichnet, dass der Protokollumsetzer aus zwei mikroprozessorgesteuerten, untereinander asynchronen Teilumsetzern besteht, von denen der erste (6) mit dem ersten Bus (4) und der zweite (7) mit dem zweiten Bus (5) verbunden ist und die untereinander über einen dritten, mittigen Bus (14) verbunden sind, wobei das dem mittigen Bus zugeordnete Protokoll von den jeweiligen dem ersten und dem zweiten Bus zugeordneten Protokollen verschieden ist.

2. Schnittstelle nach Anspruch 1, dadurch gekennzeichnet, dass zwei CPUs (8,9) vorgesehen sind, von denen je eine einen Teilumsetzer (6,7) steuert.

3. Schnittstelle nach Anspruch 2, dadurch gekennzeichnet, dass eine CPU (15) höherer Ordnung vorgesehen ist, in welcher die beiden CPUs (8,9) vereint oder enthalten sind und welche die beiden Teilumsetzer (6,7) steuert.

4. Schnittstelle nach einem der Ansprüche 1 bis 3, dadurch gekennzeichnet, dass das dem zweiten Bus (5) zugeordnete Protokoll durch ein über den ersten (4) und den mittigen Bus (14) in den der zweiten CPU (9) zugehörigen Programm- und Datenspeicher (13) eingelesenes Programm bestimmbar ist.

5. Schnittstelle nach einem der Ansprüche 1 bis 4, dadurch gekennzeichnet, dass das dem zweiten Bus (5) zugeordnete Protokoll beim Anschalten der Schnittstelle vorbestimmt und durch ein über den ersten (4) und den mittigen Bus (14) in den der zweiten CPU (9) zugehörigen Programm-und Datenspeicher (13) eingelesenes Programm veränderbar ist.

6. Schnittstelle nach einem der Ansprüche 1, 2, 3 und 5, dadurch gekennzeichnet, dass das dem ersten Bus (4) zugeordnete Protokoll durch ein über den zweiten (5) und den mittigen Bus (14) in den der ersten CPU (8) zugehörigen Programm- und Datenspeicher (12) eingelesenes Programm bestimmbar ist.

7. Schnittstelle nach einem der Ansprüche 1 bis 6, dadurch gekennzeichnet, dass das dem ersten Bus (4) zugeordnete Protokoll beim Anschalten der Schnittstelle vorbestimmt und durch ein über den zweiten (5) und den mittigen Bus (14) in den der ersten CPU (8) zugehörigen Programm-und Datenspeicher (12) eingelesenes Programm veränderbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 068 992 (CONSTANTINI) * Seite 1, Zeilen 35-37; Seite 5, Zeilen 20-40; Seite 6, Zeilen 1-22; Figur 2 * | 1 | G 06 F 13/38 |
| A,D | --- | 3,4,6 | |
| Y,D | IEEE, 1980 IECI PROCEEDINGS, APPLICATIONS OF MINI AND MICROCOMPUTERS, Philadelphia, Pennsylvania, 17.-20. März 1980, Seiten 325-329, IEEE, New York, US; A.K. VAIDYA: "Design of a programmable protocol translator for IEEE-488 interface BUS" * Seite 326, Spalte 2, Figur 2; Seite 327, Spalte 1, Spalte 2, Zeilen 1-11; Seite 329, Figur 6 * --- | 1 | |
| Y | IBM TECHNICAL DISCLOSURE BULLETIN, Band 26, Nr. 7A, Dezember 1983, Seiten 3483-3484, New York, US; R.A. PASCOE: "Interconnecting devices of different communication protocols" * Seite 3483 * | 1 | |
| A,D | Idem --- | 3 | |
| A,D | IBM TECHNICAL DISCLOSURE BULLETIN, Band 24, Nr. 12, Mai 1982, Seiten 6400-6403, New York, US; S.R. FIRTH et al.: "IBM system/370 channel/unibus interface" * Seite 6400, Zeilen 1-14; Figur 1 * ----- | 1 | |

RECHERCHIERTE
SACHGEBIETE (Int. Cl.4)

G 06 F 13/38
G 06 F 13/40

Der vorliegende Recherchenbericht wurde für alle Patentansprüche erstellt

| Recherchenort | Abschlußdatum der Recherche | Prüfer |
|---|---|---|
| DEN HAAG | 25-11-1987 | DHEERE R.F.B.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)